# EUROPEAN PATENT SPECIFICATION

(11) **EP 3 833 496 B1**
(45) Date of publication and mention of the grant of the patent: **19.02.2025**
(21) Application number: 20756087.1
(22) Date of filing: 29.01.2020
(51) Int. Cl.: B21B 27/02, B21K 1/02, C21B 9/00, B22F 3/115, B22F 3/15, B22F 10/20, B33Y 10/00, C21D 7/13, C22C 38/00, C22C 33/02, B22F 10/22, B22F 7/06, B22F 7/08

(54) **METHOD FOR THE MANUFACTURE OF MULTIMATERIAL ROLL**
VERFAHREN ZUR HERSTELLUNG VON MEHRMATERIALROLLE
PROCÉDÉ DE FABRICATION D'UN ROULEAU MULTIMATÉRIAU

(30) Priority: 14.02.2019 FI 20197024
(43) Date of publication of application: 16.06.2021
(73) Proprietor: Kerpua Solutions Oy, 33240 Tampere (FI)
(72) Inventor: TALVITIE, Mikko, 02230 Espoo (FI)
(74) Representative: Berggren Oy
(86) International application number: PCT/FI2020/000003
(87) International publication number: WO 2020/165489

(56) References cited:
- CN-A- 108 277 443
- JP-A- H0 459 901
- US-A1- 2015 089 987
- US-A1- 2017 144 205
- US-A1- 2017 144 205
- US-A1- 2018 243 815
- US-A1- 2018 243 815

## Description

### FIELD OF THE INVENTION

The invention relates to the manufacture of hot and cold working multimaterial roll produced from at least two different materials.

### BACKGROUND OF THE INVENTION

Rolls, especially working rolls, are used for the hot and cold rolling of metals like steel, copper, aluminum and titanium. Working rolls are subjected in operation for significant mechanical, thermal and chemical loading. The amount and type of loading varies in different areas. Roll working surfaces are subjected during hot rolling to thermal loads including dynamic loads due to the thermal cycling. Additionally, rolling loads result in mechanical dynamic loading for the roll surface. Oxides in the surface of hot rolled material may result in abrasive wear, and adhesive wear may even cause material tear away from the roll working surface as rolled material may weld itself onto the roll surface. During hot rolling high temperatures may result in oxidation of the working surface and the liquid coolant may increase surface corrosion. In cold rolls the surface is subjected to significant loads resulting in surface fatigue and adhesion which gradually deteriorate the surface quality and the end product surface quality. Consequently, the surface degradation mechanisms vary depending on the rolling application (hot or cold rolling) as well as depending on which materials and materials shapes are rolled (e.g. plate or bars).

Other areas of rolls than working surfaces are subjected to different loads than what working surfaces in contact with materials to be rolled are subjected to. The roll arbors, that support the rolls during the rolling operations by motors are subject to significant mechanical loads due to rolling forces. The mechanical properties, material thickness, surface quality and geometry enable the mechanical reliability of these areas and eliminate damages e.g. due to fatigue.

Because of different roll working surface material degradation mechanisms also the most suitable material selection vary from application to application. Typically, the roll working surface material should have as homogeneous as behavior as possible in order to avoid uncontrollable lifetime changes and unexpected damages.

Additionally, materials should contain minimum amount of material defects like inclusions, cracks or pores which may results in macroscopic defects as fatigue cracks initiate from these starting defects.

The present working roll materials are various cast or forged ferrous materials which are developed suitable for different applications. Both in case of cast and forged materials material selection and material property development is difficult because of limitations of production methods for increasing alloying level for e.g. improved wear resistance, temperature resistance or mechanical properties. Especially in large cast and forged products, like rolls, due to manufacturing technological limitations there is large grain size, coarse solidification structure and more inhomogeneous alloying element distribution than is small products, also rolls, which makes it more difficult to improve quality and lifetime of rolls.

Material properties can be improved using optional manufacturing technologies like powder metallurgy or spray forming and for example using electroslag re-melting. All these methods allow more homogeneous roll material. Additionally, especially using manufacturing methods based on powder metallurgy and spray forming it is possible to increase amount of alloying more than in some other methods based on casting or electroslag re-melting technology, in order to increase roll lifetime without manufacturing technology problems. On the other hand, these production technologies are more expensive than when using casting or forging technologies. This is caused by more expensive manufacturing methods due to higher cost production equipment and more complicated manufacturing solutions, also due to higher content of alloying elements used to improve lifetime.

The use of special alloying elements and manufacturing costs have been tried to reduce by producing especially larger rolls so that higher alloyed special materials are only used in working surface of the rolls while other parts of the rolls are for example forged or cast low alloyed material. It is also possible to manufacture multilayered rolls using centrifucal casting by pouring in rotating mold first higher alloyed tool steel and then as a base material low alloyed cast iron. However, using manufacturing technology based on centrifucal casting it is not possible to reach same homogeneity and carbide size optimization and alloying content as when using methods based e.g. powder metallurgy or spray forming for rolls cladded with tool steels.

One limitation related to powder metallurgy and spray forming is related to sizes possible to produce. Hot isostatic pressing (HIP) is used to produce powder metallurgical rolls which is performed in special pressure vessel capable for high pressure and high temperature. As the size of products increases also the size of pressure vessels as well as demand for space and energy increases. Furthermore, at the moment there are no large enough pressure vessels to produce largest rolls, which limits use of high alloyed powder metallurgy rolls. Large rolls refer typically to rolls that has length of more than 3,5 meters or more than 4 meters. The length of the roll means dimension which is the largest. Typically, this dimension is the dimension of the axial length of the rolls. This relates both for monolithic rolls and multimaterial rolls produced from more than one material. In hot isostatic pressing it is possible that contaminants are left on the surface of large components and hot working reduces their impact of mechanical properties of the interface. Additionally, hot working widens diffusion zone between cladding and the base materials which makes the interface less steep and consequently reduces interfacial stresses.

The same size limitation as in case of hot isostatic pressing is also related to spray forming and 3D printing when manufacturing rolls. For example in spray forming it is very difficult and expensive to manufacture large rolls and present production equipments cannot produce the largest rolls. The increase of roll ingot size in spray forming reduces metallurgical quality by slowing down metal droplet cooling and solidification speed resulting in more coarse solidification structure, increased grain size and formation of carbide networks. Spray forming can be also used to manufacture multimaterial rolls by e.g. spray forming first more resistant material onto the surface of base material that forms the working surface of the roll. However, using spray forming does not usually reach as reliable adhesion between spray formed materials and base material as by using hot isostatic pressing. Furthermore, material properties of spray formed materials, at least as thick material layers or high alloyed materials, are not sufficient for all rolling applications due to the porosity and partially continuous carbide networks.

It is also possible to produce multimaterial rolls so that special material which is more durable than base material is cast onto the working area of the roll. Limitation is this type of method is that cast material structure is coarse and inhomogeneous and is may also contain casting defects that reduce mechanical properties. Additionally, it is possible that adhesion is not sufficient to withstand loads during roll operation.

On the other hand casting method has been applied as centrifucal casting method where more durable material forming working surface of the roll is poured first rotating mold and subsequently low alloy steel or cast iron forming base material is poured. This method results in improved adhesion between different materials. On the other hand the surface materials is still cast material having typical limitations of cast steels i.e. coarse inhomogeneous, casting defects and limitations in alloying and improvement in wear resistance.

Weld cladding using different techniques is one additive manufacturing method in addition to spray forming and 3D printing. In case of weld cladding situation is the same as in case of cast cladding i.e. metallurgical quality of the cladding, welding defects and limitations in alloying limits its use for manufacture of higher quality, higher alloyed rolls. On the other hand weld cladding can be used for cladding of working surfaces of long rolls because its does not really have in size limitations. However, the metallurgical quality of weld cladding cannot be really improved. Additionally, the use of weld cladding is limited by weldability requirements of the base material as well as need to have the weld cladding materials as welding consumables.

For example, size limitations of hot isostatic pressed multimaterials for the length has been tried to be solved by using method described in patent AT 5129239 B2. In this method first a cladded hot isostatic pressed ingot is produced and after this additional part are welded to reach requested total roll length. Problem of this method is that requirement to have sufficient weldability between base material and additional parts. Because roll material carbon content is usually high in order to reach sufficient strength and surface hardenability the weldability of these materials is usually poor. Furthermore, welding requires machining of the ingot and additional weld joint areas, quite significant welding work and finally heat treatment to reduced residual stresses. Also, a non-destructive inspection is required to confirm quality of the weld. In this method, it is not possible to improve adhesion of the cladding to base material, improve metallurgical quality or form the cladded area any longer.

The use of welding to extend roll length has not been used a lot due to possible risks related to quality or quality assurance. The failure of the weld joint during operation may result in serious injuries or damage the rolling mill causing long production shutdown.

Different mechanical joining technologies has been also used like shrink joining of special materials to low alloyed, lower cost base material. These methods are, however, unreliable especially in large rolls and their use has been limited to very small working rolls, e.g. joining of hard metal rings mechanically into steel rolls. For example by shrink fitting cylindrical wear resistant special material around base material is not possible for long cylindrical parts and large rolls because reliable assembly of long cylindrical parts is difficult resulting in movement of cylindrical part during rolling operation and possible damage of the cylindrical part and the roll. Additionally, shrink fit cylindrical part may contain residual stresses after assembly and is subjected to significant bending loads during operation which results is movement of shrink fit part during rolling resulting in relative movement with base material and consequently damages in operation.

Hot working can be used according to patents US 2018243815 A1 and US 2017144205 A1 to increase length of the rolls. According to method in patent US 2018243815 A1 it is possible to produce using weld cladding or hot isostatic pressed powder metallurgy cladding a starting ingot which is subsequently hot worked. According to the method described in patent US 2017144205 A1 first a hot isostatic pressed powder metallurgy starting ingot is produced, subsequently the capsule used during hot isostatic pressing is removed and finally both ingot end without cladding are hot worked in order to reach the right length. The weaknesses of this method are possible cracking of the cladding or cladding base material interface during hot working and oxidation and decarburization of the high alloyed cladding at high hot working temperatures. Furthermore, in the method according to patent US 2017144205 A1 hot working is only limited to areas without cladding which prevents improvement of adhesion and cladding microstructure by hot working. Both methods have weaknesses resulting in cladding quality problems, possibly need to remove part of the cladding by machining (the decarburized zone and/or area containing cracks) or in the worst case even rejection of the product if crack are too deep.

JP H04 59901 describes a manufacturing method of a conjugated roll. The roll is a composite with a metal powder sintered on an outer circumferential surface of a solid roll core material. First, an annular recess is formed on the core material, and a metal capsule is attached around the core material. Between the annular recess and the metal capsule, there is an annular space, where metal powder is inserted, and this system is thereafter degassed and sealed. By hot isostatic pressing (i.e. HIP), the metal powder in sintered to the solid roll core (with high pressure and high temperature). The metal capsule is subsequently heated in its both ends (2a and 2b), and these ends are forged into a certain shape, whereafter the metal capsule is removed. A final machining is done to obtain a final predetermined roll shape for the roll stock.

At the moment there is no production technology available for utilization of multimaterial technology in rolls in order to use various high alloyed, integrated single piece multimaterial rolls with high alloyed materials in the working surfaces cost efficiently in in large, for example longer than 3 meter rolls and simultaneously guarantee good adhesion of materials layers and defect free structure. Problems are related especially for rolls, where carbide volume fraction is more than 8 volume-% and structure easily forms large continuous carbides lowering ductility and reaching fine carbide distribution with carbide average size is below 15 µm is difficult.

### SUMMARY OF THE INVENTION

In the present invention, there is introduced a method for the manufacture of multimaterial rolls as defined in independent claim 1, especially large rolls as multimaterial structure so that in the working surface of the roll there is special material having very good properties and adhesion to the base material. Especially, this method enables manufacture of materials which without production process according to this invention could not be used.

Large rolls are considered as rolls having length more than 3 meters, for example more than 3,5 meters or more than 4 meters. This length refers to largest single dimensions. Usually this dimension is roll length in axial direction from end to end.

Excellent properties of the special materials means that working surface is not exposed to unacceptable wear from the point of view of roll operation as a result of interaction between material to be rolled and the roll working surface. This type of wear may result from thermal, mechanical or chemical effects. Typically, working surface hardness should advantageously be, depending on the application, in hot rolling applications more than HRC50 and in cold rolling applications more than HRC60 so, that working surface carbide size should be less than 15 µm determined based on biggest dimension.

Excellent working surface adhesion to the base material means that working surface adhesion is sufficient to prevent its tear or gradual separation due to fatigue as a result of dynamic loads, abnormal loads or thermal loads during operation. Because the loads vary depending on the applications also requirements for the adhesion vary from application to application.

Special materials are considered as different alloyed wear resistant steels that contain sufficient amount of carbon and combination of carbide forming alloying elements to form good carbide distribution after heat treatment. These materials have carbon content more than 0.8 weight-% and carbide forming elements more than 8 weight-%. When goal is to achieve excellent wear resistant it is possible to use vanadium, tungsten and niobium as carbide forming elements as the carbides formed from these alloying elements are harder than carbides formed with chromium. Typical wear resistant special material suitable for multimaterial rolls are e.g. steels AISI D2, AISI M2, AISI M3, AISI M4, AISI A11 and AISI T15, which contain various combinations of alloying elements for achieving suitable combination of properties.

Base materials are considered as materials that are typically used to manufacture that part of the multimaterial roll which is not in contact with the material to be rolled and is not exposed for same type of wear, heat and corrosion loads as the roll working surface. However, base material has to withstand mechanical loads and same parameters for cladding, hot working and heat treatment as for special material should be suitable for it. Suitable base materials are e.g. quenched and tempered steel like DIN 42CrMo4 and carbon steel EN S355.

This invention is especially suitable for rolls where special material carbide volume fraction is large, at least 8 volume-% and carbide size is limited to below 15 µm in order to improve ductility and surface fatigue resistance.

The method according to this invention allows manufacture of roll so that
- First is manufactured a multimaterial starting ingot material components using methods suitable for them. Depending on the material suitable methods can be for example casting, welding, powder metallurgy, thermal spraying, spray forming and/or forging.
- After manufacture of material components they are joined for integrated multimaterial starting ingot if integration has been not already done in previous stage. Suitable joining methods are for example hot isostatic pressing, additive manufacturing like spray forming, 3D printing, weld cladding or cast joining.
- After joining material components for integrated multimaterial starting ingot it is possible to perform hot working of the multimaterial starting ingot at the suitable temperature with sufficient reduction in order to reach right length and diameter.
- After hot working it is possible to perform post treatments for multimaterial ingot. Typical such treatment can be for example rough machining or machining, heat treatment(s), finish machining or machining, and/or inspection or inspections.

Furthermore, in the method according to this invention it is possible to perform after joining of material components and before hot working the preparation of the multimaterial starting ingot for hot working. This type of preparation includes encapsulation.

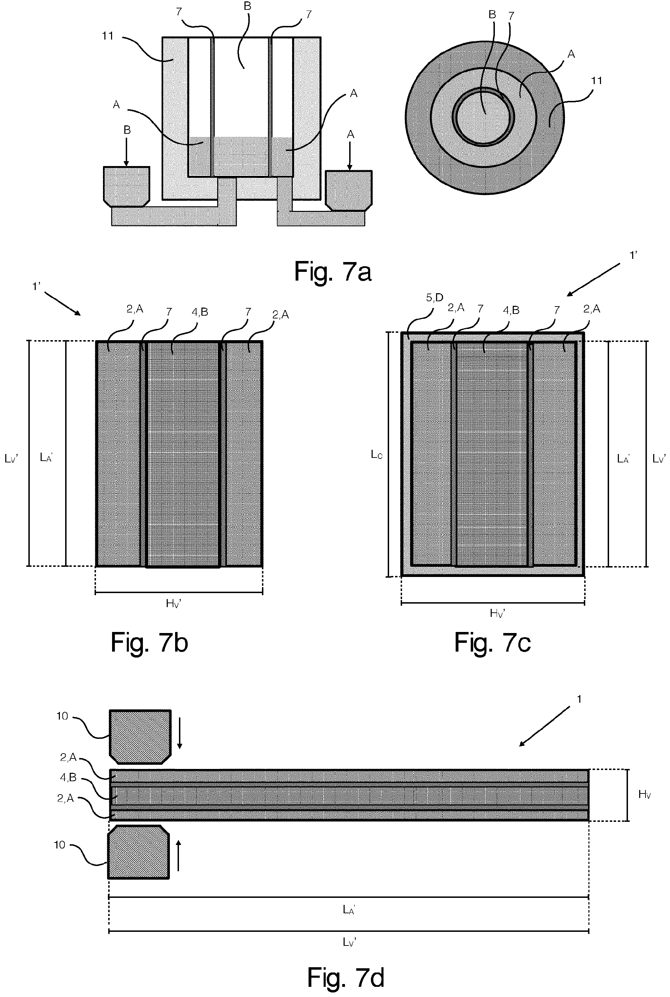

Additionally, using the manufacturing method according to this invention it is possible to produce the roll so that production of material components, joining of material components and preparation for hot working or part of these and combined for one stage after this it is possible to proceed directly for hot working. Using this approach it is possible to use e.g. casting methods to produce multimaterial starting ingot. Furthermore, this manufacturing method is suitable for additive manufacturing methods like 3D printing, molten metal spraying, spray forming and even traditional welding or weld cladding. When using this approach it is necessary to consider the quality of starting ingot and suitability for hot working. As an example of simultaneous production of special material part and base material part is casting of two different molten materials so that they do not mix with each other in the mold as they are separated using metallic sheets. The advantage of producing two materials simultaneously is that if the simultaneous manufacture is performed at elevated temperature their cooling takes place more uniformly than if only other material is manufactured at elevated temperature as the interfacial stresses are reduced. This is realized e.g. when casting both materials according to figure 7a. This method also promotes materials for joining to each other via diffusion or partial melting of the interfaces. On the other hand in additive manufacturing methods production can be performed so that before the first material has cooled down additive manufacture of other material by molten metal spraying or spray forming starts resulting in cooling rates closer to each other than when other material is entirely cold or just mildly preheated before additive manufacture of the other material. If the first material is solid before joining of the second material it is beneficial to heat it to elevated temperature before manufacture and joining of the second material in order to reduce stresses formed during cooling.

Using manufacturing methods according to this invention it is possible to produce multimaterial rolls that at the present time cannot be produced from high quality materials containing a lot of fine below 15 µm size carbides using hot isostatic pressing or electroslag re-melting in case of long rolls, for example as more than 3 meters long. At the moment it is not possible to produce rolls for plate and strip rolling mills utilizing for example hot isostatic pressing for manufacture of rolls containing powder metallurgical special materials. This is caused by equipment size limitations resulting in lack of suitable process equipments. This results in limitations in quality, wear life and control of surface roughness of working rolls critical for productivity of rolling mills.

Using the manufacturing technology according to this invention it is possible to limit use of special materials only for critical areas of the rolls like for work surfaces and consequently create savings in total manufacturing costs because special materials typically possess high costs. This way one can limit, in the case of large rolls use of special materials and enable cost control. Consequently, the invention according to this invention promotes utilization of high alloyed working rolls manufactured using more expensive production methods.

The production method according to this invention allows manufacture multimaterial long, for example longer than 3 meters rolls from one integrated material ingot so that the joint between materials is based on metallurgical and diffusion joints. This allows avoidance of welded and mechanical joints that are considered unreliable in manufacture of large, longer than e.g. 3 meters rolls.

Even though manufacturing method according to this invention offers several benefits especially in large and long rolls, it is suitable also for material, resource and cost efficient manufacture of smaller multimaterial rolls.

Manufacturing method according to this invention allows improvement properties of special materials, their densification or breakdown of carbide or solidification structure using hot working. This enables use of cast technology for the manufacture of special material part because large carbides and carbide net works can be broken finer during hot working. The microstructure breakdown is not necessary for rapidly solidified materials like powders produced using gas atomization which predominantly solidify as particles finer than 1000 µm. This type of particles are used e.g. when manufacturing special materials like tool or high speed steel using hot isostatic pressing, 3D printing, molten metal spraying or spray forming.

The manufacturing method according to this invention allows improvement adhesion of special materials to base material by hot working also the area of multimaterial ingot containing special material. This enables also use of cost efficient manufacturing technologies for multimaterial ingots and cost efficient joining methods, because using hot working it is possible to achieve better bonding between special material and base materials than in most of the production methods like cast bonding, spraying or spray forming.

The manufacturing method according to this invention enables in case of materials with poor hot workability extension of the length of the ingot by hot working only the base material with good hot workability, like carbon or quenched and tempered steels, and to avoid hot working of high alloyed special material with worse hot workability and possible crack formation during hot working.

Using the production technology according to this invention it is possible, if required, to encapsulate the entire ingot or only the area covered with special material which allows closure of cracks formed into the special material or the interface during hot working without oxidation of the crack surfaces. This enables the use of more simple, cost efficient and from available quality point of view worse manufacturing methods for production and joining of special materials, because encapsulation makes hot working easier reducing risk of cracking or risk that cracks does not heal as the hot working progresses. Additionally, encapsulation prevents oxidation of special material surface and reduces decarburization and consequently need for removal of material from the surface by machining.

In the production method according to this invention can include use of interim layer materials to prevent detrimental interfacial reactions and to reduce residual stresses related to layered structures. This enables joining and processing of materials with poor compatibility without typical cracking problems.

The production method according to this invention allows improvement of mechanical reliability because the areas of rolls that are exposed to high bending loads during rolling can be produced of base material which are less cracking sensitive and to use special material only in the working surfaces of the roll. This improves reliability of rolls and promotes their use in applications where critical areas of rolls like working surfaces are exposed to significant loads.

The production method according to this invention enables flexible selection of most feasible and cost efficient solution roll working surface materials for the application and required properties, for various size rolls, especially large ones. Today it is not possible to produce working surface of roll from most high alloyed materials as part of multimaterials structures especially in the case of large rolls. Consequently, use of production method according to this invention enables rolling application specific tailoring and material selection cost efficiently.

### BRIEF DESCRIPTION OF THE DRAWINGS

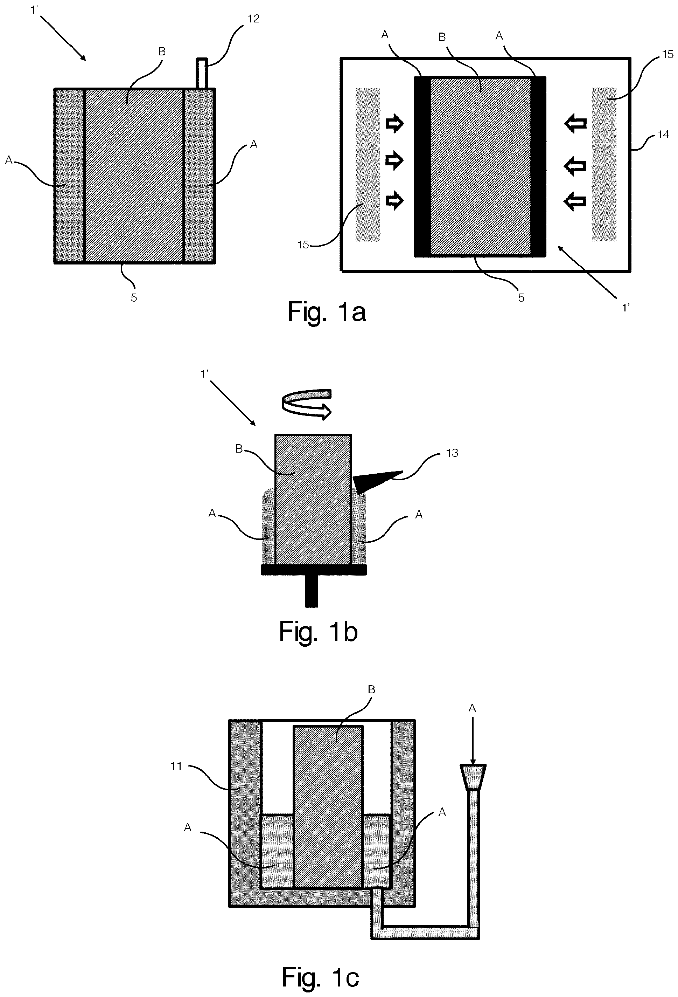

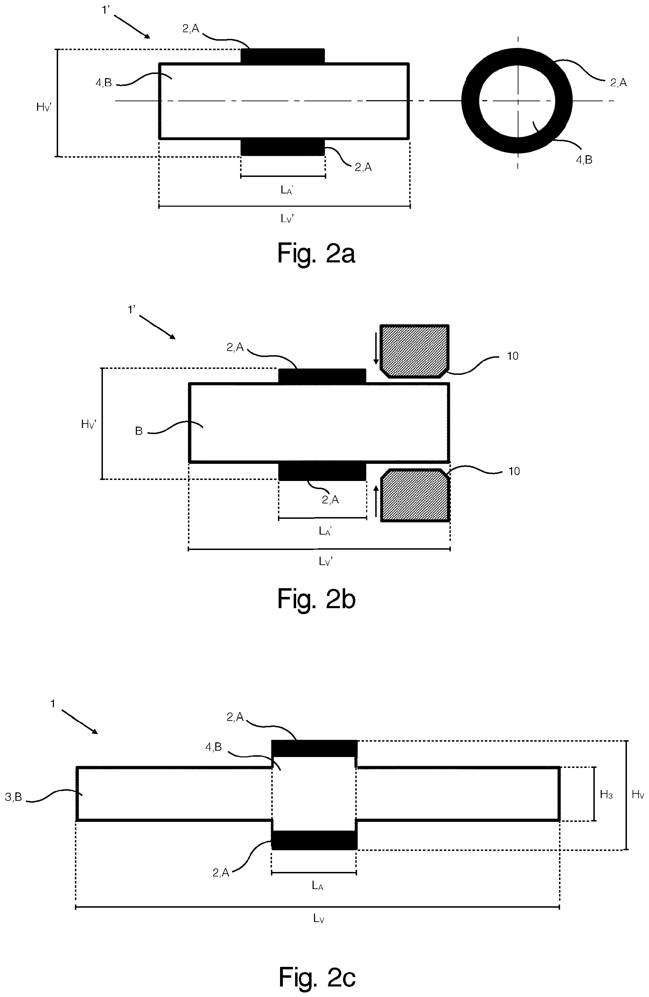

- Figures: 1a-1c illustrate principles of examples for optional manufacturing technologies for multimaterial starting ingots. Figure 1a illustrates hot isostatic pressing, Figure 1b illustrates molten metal spraying or spray forming, Figure 1c illustrates casting.
- Figures: 2a-2c illustrate manufacture of multimaterial roll by hot working uncoated areas only so, that Figure 2a illustrates multimaterial starting ingot before hot working, Figure 2b illustrates hot working by forging, and Figure 2c illustrates multimaterial roll after forging.
- Figures: 3a-3c illustrate manufacture of multimaterial roll so that multimaterial starting ingot is produced entirely using hot isostatic pressing as coated and encapsulated, and hot working is performed for the entire length of the ingot.
- Figures: 4a-4c illustrate manufacture of multimaterial roll so that in multimaterial starting ingot 3rd material is used between special material and base materials, and hot working is performed for the entire length of the ingot.
- Figures: 5a-5c illustrate manufacture of multimaterial roll so that in multimaterial starting ingot special material is coated into the roll working surface and special material is encapsulated with a sheet metal capsule, and hot working is performed by forging for the entire length of the ingot.
- Figures 6a-6c: illustrate manufacture of multimaterial roll so that in the multimaterial starting ingot special material is coated into the working surface of the multimaterial roll and special material is encapsulated with sheet metal capsule, and hot working is performed for areas not containing special material (not claimed).
- Figures 7a-7d: illustrate manufacture of multimaterial roll so that both materials of multimaterials starting ingot are produced and joined together simultaneously by casting having a steel plate separating them, ingot is encapsulated if necessary, and hot working is performed for the entire length of the ingot.
- Figures 8a-8d: illustrate manufacture of multimaterial roll so that base material is shaped in order to make encapsulation and hot working easier, and hot working is performed for the entire length of the ingot.
- Figures 9a-9c: illustrate manufacture of multimaterial roll so that multimaterial starting ingot is coated using a selected method and ingot is encapsulated with a sheet metal capsule, and hot working is performed for the entire length of the ingot.

Figures are meant to describe inventive idea. Consequently, figures are not prepared in correct scale and they are not meant to determine particular parts or relative positioning of components.

### DETAILED DESCRIPTION OF THE INVENTION

The text reference is made for drawings with following markings:
- **1**: Roll
- **1'**: Roll ingot
- **2**: Working surface
- **3**: Shaft
- **4**: Base
- **5**: Capsule
- **6**: Interim layer
- **7**: Separating steel plate
- **10**: Forging tool
- **11**: Forging die
- **12**: Evacuation pipe
- **13**: Weld end
- **14**: Pressure vessel
- **15**: Heating element
- **A**: Special material
- **B**: Base material
- **C**: Interim layer material
- **D**: Capsule material
- **H_{V}'**: Diameter of the roll ingot
- **H_{V}**: Diameter of the roll
- **H₃**: Diameter of the roll shaft
- **L**: Length
- **L_{A}'**: Length of the special area in the starting ingot
- **L_{A}**: Length of the special area of the roll
- **L_{C}**: Length of encapsulated areas
- **L_{V}'**: Roll length before hot working
- **L_{V}**: Roll length

In the method of the invention there is manufactured multimaterial roll 1 so that it is possible to utilize advantageously selected working surface 2 special materials A of the roll together with roll base material **B.** The production method according to the invention allows manufacture of large, for example rolls having length **L_{V}** more than 3 meters. The production method according to the invention enables manufacture of rolls **1** as one component without need for welding and mechanical joint so that in the working surfaces **2** of the rolls **1** there is high alloyed and a lot of alloy carbides containing steels. The production method according to the invention allows manufacture of rolls 1 with length **L_{V}** more than even 7 meters so, that in their working surface **2** contain most high alloyed wear resistant steels.

Roll **1** length **L_{V}** means total length of the roll **1.** Usually this total length is axial length along the shafts **3** of the roll **1,** like is illustrated in Figure **2***c*. In this case length **L_{V}** contains both the parts representing working surface **2** as well as shafts **3.**

The working surface **2** of the roll **1** means that part of the roll **1,** that is used for rolling and which during use of the roll **1** is in contact with the material rolled.

The multimaterial structure of roll **1** means that roll **1** contains several materials that are joined together using metallurgical or diffusion bonds without use of mechanical joints like shrink fitting, bolting or press joining.

In the following multimaterial ingot is meant to be roll ingot **1'** after hot working produced at least from two materials, and when ingot **1'** is ready for finishing by for example machining and/or heat treatment.

Hot working is considered as forming of roll ingot **1'** dimensions at elevated temperatures so that
- Roll **1** length **L_{V}** is as requested and larger than roll ingot **1'** length **L_{V}'** before hot working, and/or
- Roll **1** diameter **H_{V}** is as requested and smaller than roll ingot **1'** diameter **H_{V}'** before hot working, and/or
- Diameter **H₃ of the** roll **1** shaft **3** is as requested and smaller than respective parts diameter in the ingot **1'** before hot working

However, it should be understood that if several rolls **1** is manufactured from hot worked roll ingot **1'** for example by cutting roll ingot **1'** for several rolls **1,** the length **L_{V}** of each of these rolls **1** cut from hot worked ingot **1'** is not necessarily longer than roll ingot **1'** length **L_{V}'** before hot working. Hereafter, this special case is not repeated for the sake of clarity. However, even in this special case length **L_{V}** of rolls **1** cut from hot worked ingot **1'** are as combined length longer than roll ingot **1'** length L_{V}' before hot working.

The hot working temperature can be for example over 1000 °C, for example 1060-1200 °C or 1000-1175 °C or 1000-1200 °C or 1100-1250 °C.

Hereafter, multimaterial starting ingot considered as multimaterial ingot according to previous description before heat treatment.

Based on the method according to the invention the roll **1** used in hot or cold rolling is produced as multimaterial structure using a suitable method so, that for the roll **1** working surfaces **2** a more wear resistant special material **A** is used and in roll base **4** and other parts a lower material cost but mechanical strong base material **B** is used.

The special material **A** part of the roll **1** may form maximum 40 volume-% or maximum 30 volume-% or maximum 20 volume-% or maximum 10 volume-% or maximum 5 volume-% of roll **1.**

The special material **A** part of the roll may for example form a coating in the outer circumference of the finished roll. In this case coating length can be for example for 500 mm or 750 mm or 1000 mm or 1250 mm or 1500 mm length of the total length **L_{V}** of the finished roll **1.**

Special material **A** can be for example one of the steels AISI D2, AISI T15, AISI A11, AISI M3 and AISI M4. Characteristic for special material **A** is that in order to improve its wear resistance and hardness better than that of normal steels, its carbide content has been increased by higher carbon content and sufficient amount of carbide forming alloying elements.

Carbon content of special materials **A** is more than 0.8 weight-% or for example more than 1.1 weight-%.

Special material **A** may contain carbide and/or nitride forming alloying elements like chromium, molybdenum, vanadium, tungsten, niobium or titanium. Carbide and/or nitride forming alloying element content is more than 8 weight-% or more than 12 weight-% or more than 15 weight-%.

Special material **A** may have when finished heat treated for example hardness more than HRC35 or more than HRC45.

The average carbide size of special material A can be for example smaller than 50 µm or smaller than 20 µm. Carbide size is determined by its largest dimension.

Base material **B** can be for example steel DIN 42CrMo4 or carbon steel EN S355.

It is characteristic for base material **B** that its total alloying content is low and its carbon content is usually below 0,5 weight-%.

The part of multimaterial roll **1'** containing special material **A** like the working surface **2** in joined for base material **B** containing part like base **4** using a method suitable to produce and/or join the materials used. Joining may take place simultaneously with the manufacture of special material containing part **A,** like in weld cladding or when using hot isostatic pressing to produce powder metallurgical material or cladding to the surface of base material **B** containing part.

Based on the method of this invention it is also possible to produce roll ingot **1'** special material **A** containing part and base material **B** containing part simultaneously so, that they join to each other simultaneously with the manufacture at least other of the parts. Figure **7*****a*** illustrates example, where both special material **A** containing part and base material **B** containing part are cast simultaneously and during cooling they bond to each other.

For the manufacture of multimaterial starting ingot **1'** for roll **1** one can use several methods, like for example is illustrated in Figure **1***a* hot isostatic pressing, in Figure **1***b* molten metal spraying or spray forming, or in Figure **1***c* casting.

In the method illustrated in Figure **1***a* special material **A** and base material **B** are located with joining surfaces facing each other, material is encapsulated around using sheet metal capsule and joining is performed at elevated temperature and pressure in a special high temperature pressure vessel. Special material **A** can be either as a powder particles or solid material. After this multimaterial starting ingot is ready for hot working.

In the method illustrated in Figure **1***b* after coating using molten metal spraying or spray forming multimaterial starting ingot is ready for hot working.

In the method illustrated in Figure **1***c* special material **A** and base material **B** are cast simultaneously into the mold using interim plate to separate melts from each other. After solidification multimaterial starting ingot is ready for hot working.

The special material **A** containing part manufacturing method is selected based on the composition of base material **B,** like steel. For example use of powder metallurgical or another rapid solidification technology to produce special material **A** is suitable for most high alloyed materials and their densification and joining for base material **B** is performed using hot isostatic pressing. On the other hand when using weld cladding the weldability of special material **A** and its availability as welding additive need to be considered. Additionally, due to the productivity limitations of weld cladding method it is mainly suitable for thin coatings. When using casting method to manufacture special material **A** containing part and join to base material **B** containing part, one has to consider castability of special material **A** and sufficient hot workability during hot working process stage of roll ingot **1'.**

Also other production methods to manufacture multimaterial starting ingot **1'** for roll **1** can be utilized depending on the amount of alloying elements, microstructure and suitability for different stages of production.

The multimaterial starting ingot **1'** for roll 1 can be also produced so, that both special material **A** containing part and base material **B** containing part can be simultaneously manufactured and joined to each other. The advantage of this procedure is that amount of working stages is reduced and the base materials **B** containing part does not need to be machined and prepared for coating. Additionally, as both parts of the multimaterial starting ingot **1'** containing different materials cool together residual stresses of the ingot are lower.

Figures **7***a*-**7***d* this type of production method with simultaneous manufacture and joining in case of casting method. In casting method special material **A** and base material **B** are poured into the mold simultaneously as illustrated in **7***a*. Special material **A** containing parts and base material **B** containing part are separated by metallic sheet **7** that can withstand casting temperature and can separate material **A** and **B** containing parts from each other. Hereafter, multimaterial starting ingot **1'** is hot worked according to Figure **7***d* as it is according to Figure **7***b* or encapsulated as illustrated in Figure **7***c*. As a result of hot working is hot worked multimaterial ingot **1'** hot worked for requested thickness **H_{V}** and length **L_{V}.** This production is suitable also for other production methods than those based on casting, like powder metallurgically produced ingots where special material **A** and/or base material **B** are in powder form and compacted in one production stage for example by hot isostatic pressing to multimaterial starting ingot for hot working.

Another example of simultaneous production is variation method illustrated in Figure **1***b* where first a base in manufactured using molten metal spraying or spray forming of base material **B** and subsequently spray forming is continued with special material **A** around base material **B** to produce multimaterials starting ingot. The advantage of this method as well as for method based on casting as illustrated in Figure **7***a* is reduced risk for cracking because special material **A** cools down almost simultaneously with base material **B.** Additionally, manufacture and possible machining of base material **B** are avoided before manufacture of multimaterial starting ingot.

Based on the production method according this invention roll ingot **1'** is heated to elevated temperature entirely and partially after part containing special material A like working surface **2** in joined to base material **B** containing part like to base **4.** Elevated temperature means for example 800-1300 °C, or for example over 1000 °C, like for example 1060-1200 °C or 1000-1175 °C or 1000-1200 °C or 1100-1250 °C. For example, when hot working base material **B in** the ends of roll **1'** to increase length it is possible to heat only these areas for hot working temperature.

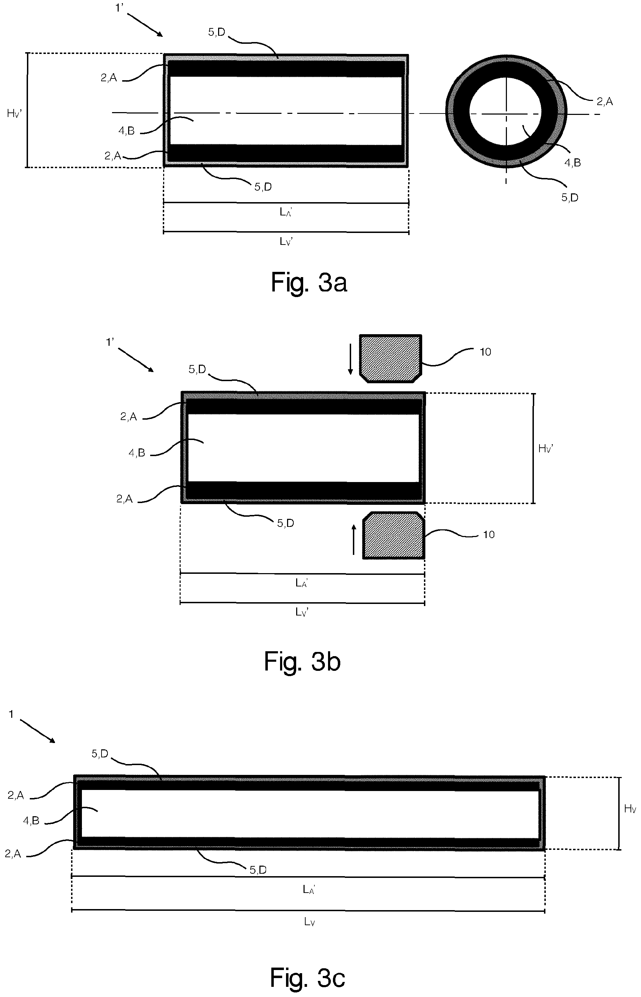

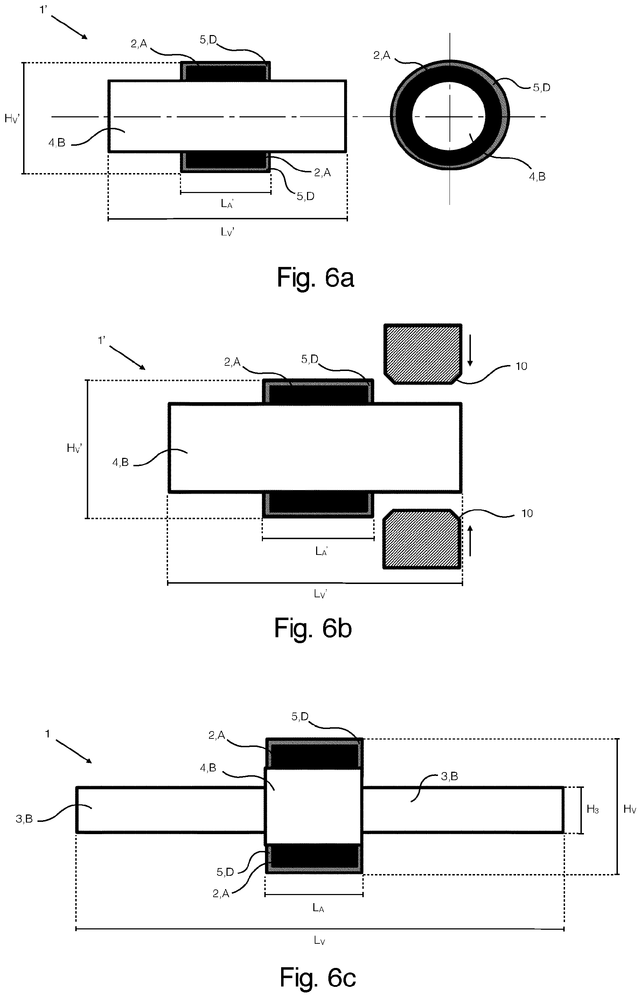

Using hot working roll ingot **1'** length can be increased at high temperatures to length **L_{V}'** long enough to produce final roll **1** so, that length **L_{V}** of the final roll **1** is larger than roll ingot **1'** length **L_{V}'** before hot working. Additionally, with hot working it is possible to reach special material A structure and quality as well as to reach requested bond strength of special material containing part to base material containing part. Hot working can be performed for the entire length of ingot **1',** like illustrated in Figures **3-5** and **8-9,** or only for part of it, like illustrated in Figures **2** and **6****.** If hot working is only performed for part of the roll ingot **1'**, it can be performed for example only for that part of the ingot **1'** that does not contain special material **A,** like illustrated in Figures **2** and **6****.**

The extent of hot working can be decided based on the need of the area coated with special material **A** to guarantee quality and bond strength.

Figures **3***a*-**3***c* present one example of hot working roll ingot **1'** so, that hot work item is hot isostatically pressed multimaterial starting ingot **1'** that contains outer layer capsule **5** made of capsule material **D** like illustrated in Figure **3***a*. In this example hot working is performed according to Figure **3***b* for the entire ingot **1'** in order to increase length of finished roll **1** for requested length **L_{V}.**

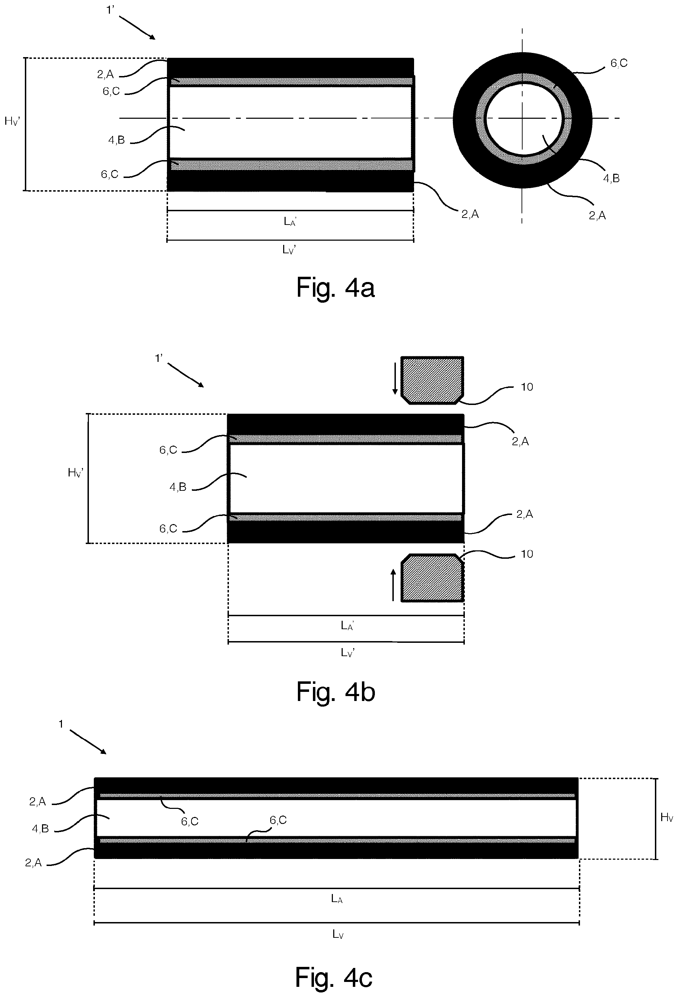

Figures **4***a*-**4***c* illustrates another example how hot working of roll ingot **1'** can be performed so that hot working is performed for multimaterial starting ingot **1'** that contains interim layer 6 of interim layer material **C** between special material **A** containing part and base material **B** containing part. In this example hot working is performed as illustrated in Figure **4***b* for entire multimaterial starting ingot **1'.**

The multimaterial ingot **1'** can be produced for example as illustrated in Figures **3***a-***3***c* and **4***a*-**4***c* so, that special material **A** is bonded for the entire outer surface of base material **B** containing part so that the entire ingot length increases as multimaterial structures while in ingot cross section base material **B** containing part is surrounded by special material **A** containing part. As a result of hot working also in roll ingot **1'** extended for length **Lᵥ'** special material **A** is possibly also in other areas of finished roll than in roll working surface **2.** Consequently, in order to produce finished roll **1** it is possible to perform finish machining where special materials **A** can be removed for example from other surfaces than for the working surface or working surfaces **2** of finished roll **1.** This production method is suitable for applications, where target is to coat main part of base material **B** containing part with special material **A** and/or hot working is requested to improve structure of special material **A** or its bond strength to base material **B.**

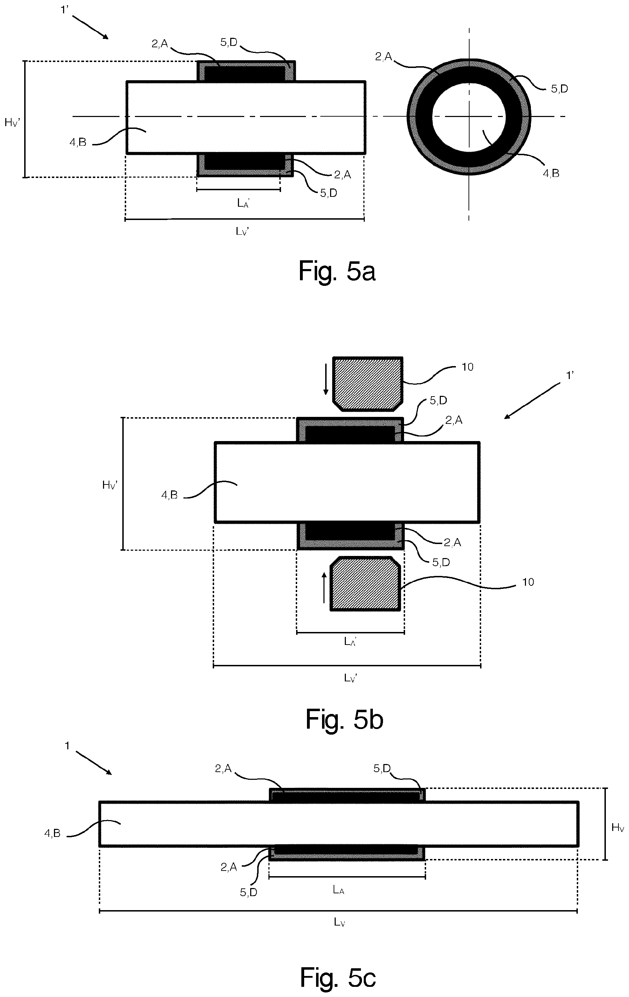

The roll multimaterial ingot **1'** can be also produced as illustrated in Figures **5***a*-**5***c* and **6***a*-**6***c* (not claimed) so that special material **A** has been bonded to base material **B** containing part of for parts of the outer surface. Using this approach one can save costs of higher quality and higher material cost special materials **A** and to use special materials A only in critical areas of the roll **1** like roll working surfaces. This allows use of hot working for the entire roll ingot **1'** as for example illustrated in Figures **5***a*-**5***c* including special material **A** containing part, i.e. for example are of roll ingot **1'** surrounded by special material **A.** Multimaterial ingot of roll **1** can be hot worked only partially for example as illustrated in Figures **6***a*-**6***c* from those areas, which does not contain special material **A** surrounding base material **B** containing part (not claimed).

This latter option is advantageous especially in situations where hot workability of special material **A** is poor and/or where special material **A** containing part does not require hot working for improving bond strength or material properties.

This type of situation, where bond strength between special material **A** and base material **B** is sufficient also without hot working, is for example when producing special material **A** containing part and then joining it to base material **B** containing part using hot isostatic pressing. In hot isostatic pressing as illustrated in Figure **1***a* the special material **A** which is either in powder form or solid is encapsulated together with base material **B** containing part and hereafter capsule interior is evacuated. Subsequently, encapsulated ingot **1'** is transferred into high temperature pressure vessel **14** where ingot **1'** is subjected to combination of high temperature and isostatic pressure which results in bond formation between special materials **A** and base material **B** so there is created a joint between special material **A** containing part and base material **B** containing part. If special material **A** is in powder form, in compacts and densifies during production process. The temperature in the pressure vessel can be for example 1000-1200 °C. The pressure used in the pressure vessel can be for example 80-150 MPa.

If hot working of the special material **A** containing part during hot working of the entire ingot is beneficial for example for improving properties of special material **A** and/or to increase bond strength between special material **A** containing part and base material **B** containing part, it is also possible to hot work special material **A** containing part like for example to hot work from roll ingot **1'** special material **A** containing part addition to other areas hot work from ingot **1'.** Figures **5***a*-**5***c* illustrate this method based on one example.

If roll ingot **1'** special material **A** containing part and base material **B** containing part are hot worked simultaneously, it is important to select hot working parameters like hot working temperature so, that hot working parameters are suitable for both materials and so, that selected hot working parameters does not cause cracking for special material **A** and/or base material **B.**

For example, combination of special material **A** AISI D2 and base material **B** DIN 42CrMo4 can be advantageously hot worked at the temperature of 1000-1200 °C. After hot working in aforementioned case hot worked ingot can be transferred to furnace, which has temperature preferably at 650-750 °C, for duration of 6 hours, and consequently furnace temperature can be slowly cooled down to room temperature.

Between some materials, like for example AISI T15 as special material **A** and carbon steel EN S355 used as base material **B** it can be beneficial to use interim layer material **C** between special material **A** and base material **B** to promote bond formation, to reduce residual stresses and/or to prevent formation of brittle microstructures. When using interim layer material **C** in roll ingot **1'** can interim layer material **C** as an interim layer **6** be between special material **A** containing part and base material **B** containing part. Use of interim layer material **C** as described above is illustrated in Figures **4***a*-**4***c* according to one example. Interim layer material **C** can be for example quenched and tempered steel or nickel layer.

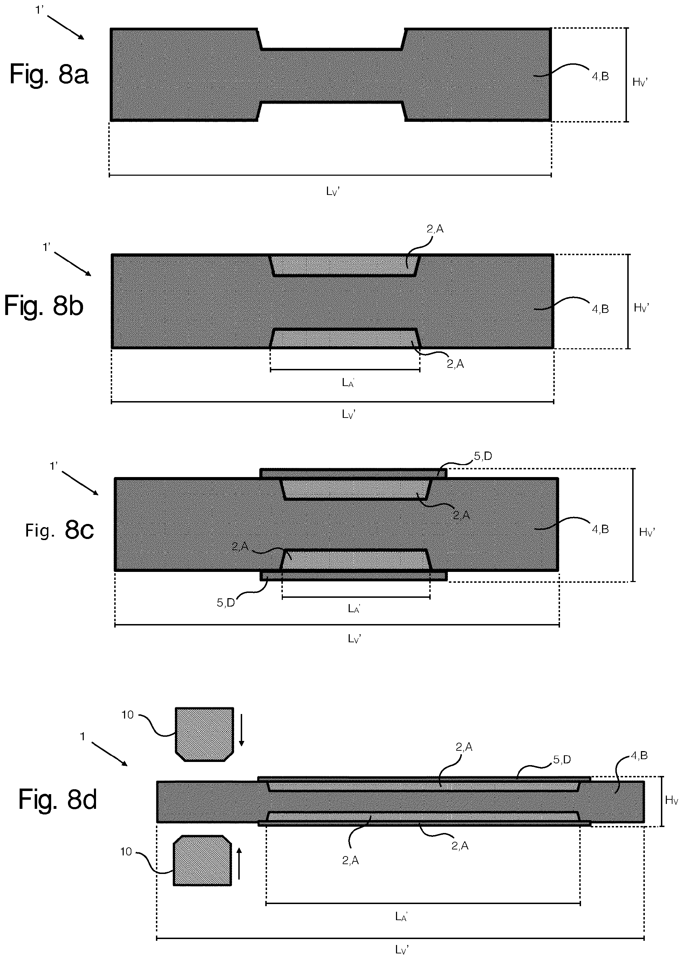

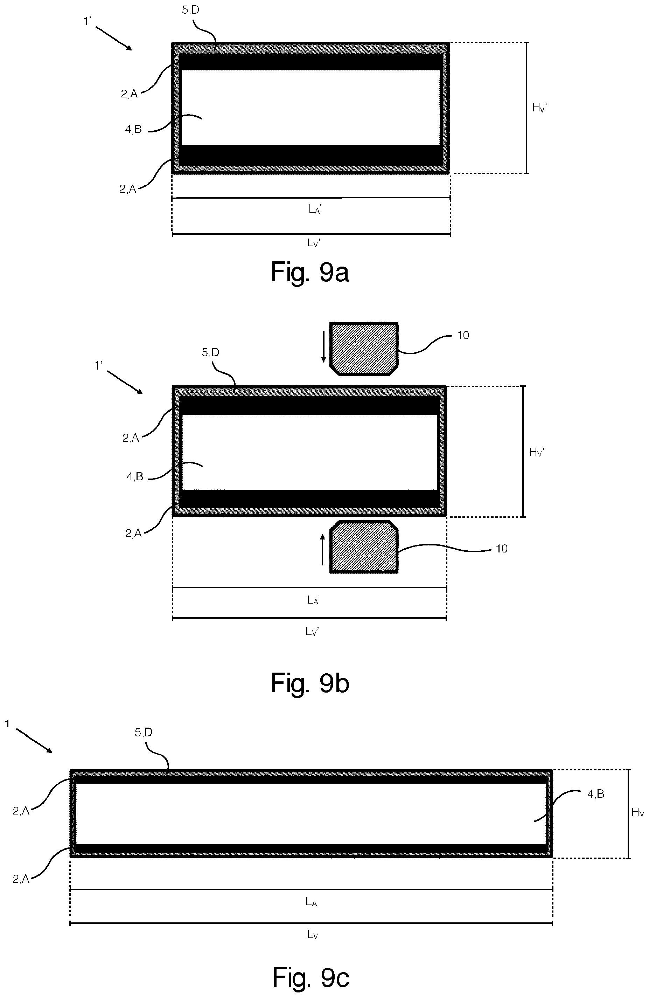

Before hot working, especially if also the material **A** containing parts of the roll **1'** s hot worked, it may be need to protect material **A** containing parts by encapsulating it with a capsule **5** as illustrated in Figures **8***a*-**8***d* and **9***a*-**9***c*. Capsule **5** can be sheet metal made of low carbon steel with good formability having carbon content below 0,1 weight-%. Capsule **5** can be used for example so that it covers the entire roll ingot **1'** as described in Figures **9***a*-**9***c*. Capsule **5** thickness can be for example at least 0,5 mm or at least 1,5 mm.

Capsule **5** can protect special material **A,** which due to its high alloying element content is vulnerable for cracking. This type of protection i.e. encapsulation can prevent oxidation of cracks formed into special material **A** and especially for special material **A** containing part of roll ingot **1'.** It is beneficial to prevent surface oxidation of cracks because oxidation reduces or even prevents closure of cracks during hot working as hot working progresses.

Also prevention of the oxidation of cracks and consequently prevention from repair of the interface between special material **A** containing part and base material containing part of roll ingot **1'** is easier as capsule **5** protects encapsulated surfaces and prevents their oxidation. Capsule **5** also protects special material **A** containing part from oxidation and decarburization reducing need for removal of decarburized layer during final machining of the roll ingot **1'.** Additionally, encapsulation may reduce need for use of special furnaces like vacuum and protective atmosphere furnaces during heat treatment which are more expensive to use than normal furnaces. The volume in ingot **1'** below the capsule **5,** even small one, on advantageous to evacuate i.e. remove air from empty volume or optionally fill with inert or non-detrimental gas like nitrogen, or gas mixture. Evacuation improves effects of encapsulation by preventing interfacial surface oxidation and by improving join quality below the capsule and the layer below it. After evacuation the empty volume can be sealed gas tight to prevent oxidation and/or decarburization.

If special material **A** containing part of roll ingot **1'** is joined to base material **B** containing part by hot isostatic pressing so, that a metal capsule **5** is used either around entire roll ingot **1'** or at least around special material containing part, this encapsulating capsule **5** does not need to be separately produced for hot working. However, when using another joining method like electroslag re-melting, casting, spraying, spray forming or weld cladding, the encapsulating capsule 5 needs to be produced separately.

Especially in situations where in the multimaterial starting ingot **1'** the entire base materials **B** containing part is not coated with special material **A,** it is possible to encapsulated special material **A** containing part by welding capsule **5** to base material **B** surrounding special material. This is illustrated for example in situations described in Figures 5a-5c, 6a-6c (not claimed) and 8a-8d.

In Figures **8***a*-**8***d* is illustrated example to create a shaped base material **B** part roll ingot **1'** before joining special material **A** containing part so, that encapsulation after work working is easier. As illustrated in Figure **8***a* cavity is produced for base material **B** containing parts by machining, casting or forging to the area where special material **A** is joined i.e. where the special material **A** containing part is forms. Figure 8c illustrates production of special material **A** containing part surrounded by capsule **5.** Figure **8***d* illustrates how hot working is performed for the multimaterial starting ingot **1'** described previously. In this case illustrated in Figures 8a-8d encapsulating capsule **5** can be produced from rolled sheet metal or by using tubular capsules **5.** The production method according to this invention allow manufacture of multimaterial roll **1** by cold or hot working. According to production process on invention a multimaterial roll **1** can be produced as one integrated component without welding and/or mechanical joint. Especially, production method according to invention is suitable to manufacture large multimaterial rolls **1** for lengths **L_{V}** more than 3 meters or more than 3,5 meters or more than 4 meters.

It is essential to observe that both materials in multimaterial starting ingot are before hot working dense or almost dense and from performance point of view good enough for several less demanding applications than roll applications.

Additionally, in the method according to this invention surface of roll ingot **1'** or part of it can be encapsulated by capsule **5** before heat treatment. Encapsulation is always performed when using hot isostatic pressing and when special material **A** is powder form. Encapsulation can be, however, performed as previously described also to guarantee successful hot working and to minimize decarburization when using other production and joining methods for special material **A.**

Furthermore, in the production method according to this invention can be used interim layer **6** of interim layer material **C** between special material **A** part and base material **B** part of the roll ingot **1'** to reduce detrimental interfacial reactions. Interim layer **6** can be installed for example to surface of base material **B** containing part by weld cladding, spraying or thin sheet or band.

### Example 1

Base material part of roll ingot **1'** is produced so that base material **B** is 0,15 weight-% carbon containing structural steel.

Around ingot **1'** is coated by hot isostatic pressing at temperature of 1100 °C and pressure of 100 MPa special material **A,** which is tool steel having carbon content of 1,6 weight-% total amount of carbide forming alloying elements (vanadium, molybdenum, chromium) is 15 weight-% (vanadium 9,5 weight-%, chromium 5,0 weight-% ja molybdenum 0,5 weight-%). This way is produced special material **A** containing part around base material **B** containing part of roll ingot **1'.** For hot isostatic pressing production stage an encapsulating capsule **5** is made around base material **B** containing part and special material **A** containing part using low carbon structural steel (carbon content 0,1 weight-%), which is evacuated before hot isostatic pressing.

The multimaterial ingot **1'** is hot worked by forging after hot isostatic pressing at temperature of 1060-1200 °C for the entire length of the ingot **1'** so, that the encapsulating metallic capsule **5** is maintained in the ingot during hot working. Encapsulating capsule **5** is removed after hot working by machining.

In this example multimaterial ingot **1'** length **L_{V}'** of the roll ingot before hot working is 2 meters and diameter **H_{V}'** is 0,5 meters, and after hot working length **L_{V}'** is 5,5 meters and diameters **H_{V}'** is 0,15 meters.

### Example 2 (comparative)

The base material **B** part of roll ingot **1'** is produced as forging so that base material **B** is AISI H13 steel.

Around this ingot **1'** is joined by hot isostatic pressing at temperature of 1150 °C and pressure of 120 MPa special material **A,** which is powder metallurgical tool steel AISI M4. Special material **A** is joined only to that part of the roll ingot **1'** containing base material **B,** which forms working surface **2** of the roll **1** after subsequently performed hot working of ingot **1'.** This way is produced special material **A** containing part to join base material **B** for ingot **1'.**

The multimaterial ingot **1'** produced this way is hot worked after hot isostatic pressing at temperature of 1000-1175 °C so, that both ends of the ingot **1'** not coated with special material **A** are forged longer and special material **A** is not hot worked. Hot working is not performed for the part of ingot **1'** containing special material **A,** on the contrary it is performed for other parts of roll ingot **1'.**

In this example the length **L_{V}'** of multimaterial ingot **1'** before hot working is 2 meters and diameter **H_{V}'** 0,5 meters, and after hot working length **L_{V}'** is 5,5 meters and diameter **H_{V}'** is 0,15 meters.

### Example 3

Base material **B** containing part of roll ingot 1' is produced as steel forging so that base material B is quenched and tempered steel.

Around this **1'** is joined for entire length **L_{V}'** of ingot **1'** length **L_{V}'** by casting bonding special material **A** which is tool steel AISI D2. This way is produced special material **A** containing part of ingot **1'** around base material **B** containing part.

The multimaterial ingot **1'** of the roll is encapsulated by capsule **5,** which is 10 mm thick structural steel containing 0,1 weight-% carbon. The encapsulated area is evacuated by removing the air away.

Subsequently, the ingot **1'** is hot worked by forging at temperature of 1050-1200 °C for the entire length including area coated with special material **A.**

After hot working ingot **1'** is cooled down slowly in the furnace to room temperature, and hereafter it is finish machined to requested roll **1** length of **L_{V}** and heat treated by quenching and tempering to hardness of HRC52.

In this example multimaterial ingot **1'** length **L_{V}'** before hot working is 2 meters and diameter **H_{V}'** is 0,5 meters, and after hot working length **L_{V}'** is 8 meters and diameter **H_{V}'** is 0,125 meters.

### Example 4

For the part of roll ingot **1'** base material containing part, which after hot working performed afterwards represent working surface **2** of roll **1,** is formed interim layer **6** using interim layer material **C** as 1 mm thick nickel layer.

After this coating for the areas coated of ingot **1'** a special material **A** is joined to its outer circumference at temperature of 1120 °C and pressure of 105 MPa, which is tool steel AISI T15. In this process is created special material **A** containing part on the interim layer **6.**

After hot isostatic pressing multimaterial ingot **1'** is hot worked by forging at 1000-1200 °C for the entire length including area coated with special material **A.**

In this example multimaterial ingot **1'** length **L_{V}'** before hot working is 1,5 meters and diameter **H_{V}'** is 0,5 meters, and after hot working length **L_{V}'** is 6 meters and diameters **H_{V}'** is 0,125 meters.

### Example 5 (comparative)

Base material **B** containing part of roll ingot **1'** is produced as a steel forging so that base material **B** is carbon steel.

Special material **A** containing part is produced separately using hot isostatic pressing so, that special material **A** is tool steel AISI D2. This special material **A** containing part is machined as a separate part for such a geometry, that it can be installed around base material **B** containing part of roll ingot **1'.**

This multimaterial ingot **1'** is encapsulated with a capsule **5** so, that capsule is 10 mm thick structural steel with 0,1 weight-% carbon. Hereafter, encapsulated capsule is evacuated by removing air.

Subsequently, hot isostatic pressing is performed for multimaterial ingot **1'** at temperature of 1140 °C and pressure of 100 MPa in order to join separately produced special material **A** containing part around base material **B** containing part.

After this, areas which are not coated with special material multimaterial ingot **1'** of the roll **1** are hot worked at 1000-1175 °C in order to reach total roll **1** length of **L_{V}.**

So, hot working is performed for other areas of roll ingot **1'** than those containing special material **A.**

In this example the multimaterial ingot **1'** length **L_{V}'** before hot working is 1,5 meters and diameter **H_{V}'** is 0,5 meters, and after hot working length **L_{V}'** is 6 meters and diameters **H_{V}'** is 0,125 meters.

### Example 6 (comparative)

Base material B containing part of roll ingot **1'** is produced as a steel forging so, that base material **B** is quenched and tempered steel.

The special material part **A** is produced around base material containing part of roll ingot **1'** so, that into the surface of base material **B** containing part is weld cladded by submerged arc welding a special material **A** which is tool steel having carbon content of 1,5 weight-% and chromium content of 15 weight-%.

After welding the weld cladded area in encapsulated with a capsule **5** and encapsulated area is evacuated removing area from the capsule.

Hereafter, ingot **1'** is hot worked by forging at temperature of 1100-1250 °C so, that hot working is performed for the weld cladded areas.

After hot working multimaterial ingot **1'** is finish machined and heat treated by quenching and tempering to hardness of HRC50.

In this example multimaterial ingot length **L_{V}'** before hot working is 2 meters and diameter **H_{V}'** is 0,3 meters, and after hot working the length **L_{V}'** is 4.5 meters and diameter **H_{V}'** is 0,2 meters.

### Example 7

Roll ingot **1'** is cast in vertical position so, that
- Special material **A** containing part and base material **B** containing part of roll ingot **1'** are produced simultaneously so, that special material **A** and base material **B** are cast simultaneously,
- In the casting mold is separating plate **7** between special material **A** and base material **B,** which is 10 mm thick steel sleeve,
- Special material **A** is tool steel AISI D2, and
- Base material **B** is carbon steel.

After casting multimaterial ingot **1'** is encapsulated entirely with a capsule **5** so, that capsule **5** is 15 mm thick and its material is 0,1 weight-% carbon containing structural steel.

This encapsulated roll ingot **1'** is hot worked by forging at temperature of 1000-1200 °C.

In this example multimaterial ingot **1'** length **L_{V}'** before hot working is 1,5 meters and diameter **H_{V}'** is 0,4 meters, and after hot working length **L_{V}'** is 3 meters and diameter **H_{V}'** is 0,28 meters.

### Example 8

First, base material **B** is produced by spray forming and hereafter immediately before cooling of base material special material **A** is spray formed for part of the base material **B** so, that
- Base material **B** and special material **A** containing parts of the roll ingot **1'** are produced sequentially so that base material temperature is not cooling below 300 °C before start of spray forming of special material **A,**
- Special material **A** is tool steel AISI M3, and
- Base material **B** is steel AISI H13.

After the two phase spray forming multimaterial ingot **1'** is encapsulated entirely with a capsule **5** so, that capsule **5** is 10 mm thick and made of structural steel containing 0,1 weight-% of carbon.

The encapsulated roll ingot **1'** is hot worked by forging at temperature of 1000-1200 °C.

In this example multimaterial ingot **1'** length **L_{V}'** before hot working is 1,5 meters and diameter **H_{V}'** is 0,4 meters, and after hot working length **L_{V}'** is 3 meters and diameter **H_{V}'** is 0,28 meters.

### (End of examples)

The inventive idea also included multimaterial hot or cold working roll **1,** which includes part produced of base material **B,** part produced of more wear resistant coating material **A** and possibly encapsulating capsule **5** and/or interim layer with interim layer material **C** between special material **A** and base material **B.**

The method according to this invention enables manufacture of rolls containing special material **A** with hardness at least HRC 35 after heat treatment and carbide volume fraction at least 5 volume-%.

The examples presented are intended to describe the inventive nature. Consequently, they should not be considered as concrete description of the manufacturing process according to the inventive idea.

## Claims

1. Method for the manufacture of multimaterial rolls (1) comprising following steps:
- Base material (B) containing part of the roll ingot (1') is produced based on the selected method so, that the base material (B) is such ferrous material which contains other alloying elements than iron maximum 15 weight-%,
- Special material (A) containing part is joined to the base material (B) containing parts of the roll ingot (1'), which is produced using a suitable method so that special material (A) density is at least 90% of its theoretical density and it forms 5-40 volume -% of the total volume of base material (B) and special materials (A), wherein the special material is an alloyed wear resistant steel having a carbon content more than 0.8 weight-% and carbide forming elements more than 8 weight-%,
- The base material (B) and special material (A) containing part of the roll ingot (1') is hot worked at least for the part of the length (L_{V}') of the roll ingot (1') so, that following is reached after hot working:
- The length (L_{V}) of the roll (1) is longer than roll ingot (1') length (L_{V}') before hot working, and/or
- The diameter (H_{V}) of the roll (1) is smaller than roll ingot (1') diameter (H_{V}') before hot working, and/or
- Roll (1) shaft (3) diameter (H₃) is smaller than base material (B) diameter before hot working, and
- Multimaterial special material (A) layer thickness is at least 5 mm,
- **characterized in that,** before hot working at least the special materials (A) containing parts of the roll ingot (1') is encapsulated by capsule (5) using at least 0,5 mm thick metal sheet and other metal components to protect encapsulated parts of the roll ingot (1') during hot working, and wherein
- the hot working is performed for the entire length of the roll ingot (1').

2. Method according to Claim 1, **characterized in that** special material (A) is iron based material comprising
- Carbon content more than 0,8 weight-%,
- Carbide and nitride forming elements more than 12 weight-%,
- Volume fraction of carbides and nitrides 5-30 volume-%,
- Hardness heat treated for final operating condition more than HRC 35.

3. Method according to any of the preceding claims 1-2, **characterized in that** carbide average size in special material (A) is smaller than 50 µm.

4. Method according to any of the preceding claims 1-2, **characterized in that** carbide average size in special material (A) is 1-10 µm.

5. Method according to any of the preceding claim 1-4, **characterized in that** after encapsulation and before hot working of the roll ingot (1'),
- The empty space below encapsulating capsule (5) is evacuated or filled with the gas, and
- Hereafter the aforementioned empty space is closed gas tightly in order to prevent oxidation and/or decarburization.

6. Method according to any of the preceding claims 1-5, where the special material (A) containing part is joined to the base material (B) containing part of roll ingot (1'), **characterized in that** between these materials is arranged interim layer (6) containing interim layer material (C).

7. Method according to any of the preceding claims 1-6, **characterized in that** the special material (A) containing part or the interim layer (6) are joined to the base material (B) containing part of the roll ingot (1') by hot isostatic pressing, casting, molten metal spraying or spray forming, 3D printing, welding or other additive manufacturing method.

8. Method according to any of the preceding claims 1-7, **characterized in that** the special material (A) is powder metallurgical materials.

9. Method according to any of the preceding claims 1-8, **characterized in that** the special material (A) containing part of the roll ingot (1') is joined to the base material (B) containing part during manufacture of the special material (A).

10. Method according to any of the claims 1-9, **characterized in that** the base material (B) and special material (A) are produced using additive manufacturing process like molten metal spraying, spray forming and 3D printing.

11. Method according to any of the preceding claim 1-10, **characterized in that** hot working is performed using hot forging, hot pressing or hot rolling at temperature of 800-1300 °C.

12. Method according to any of the preceding claims 1-11, **characterized in that**
- Length (L_{V}) of the finished roll (1) is more than 3 meters,
- Special materials (A) containing part forms coating on the outer surface of the finished roll (1) so, that this forms coating for at least length of 500 mm of the total length (L_{V}) of the finished roll (1), and
- Special material (A) forms at least 10 mm thick coating for at least 80 % of the total area of the coating.

## Patentansprüche

1. Verfahren zur Herstellung von Multimaterialrollen (1), umfassend die folgenden Schritte:
- Basismaterial (B), das einen Teil des Walzbarrens (1') enthält, wird basierend auf dem gewählten Verfahren so hergestellt, dass das Basismaterial (B) ein solches eisenhaltiges Material ist, das andere Legierungselemente als Eisen mit maximal 15 Gew.-% enthält,
- Spezialmaterial (A) enthaltender Teil wird mit den Basismaterial (B) enthaltenden Teilen des Walzbarrens (1') verbunden, der unter Verwendung eines geeigneten Verfahrens hergestellt wird, sodass die Dichte des Spezialmaterials (A) mindestens 90 % seiner theoretischen Dichte beträgt und es 5-40 Vol.-% des Gesamtvolumens des Basismaterials (B) und der Spezialmaterialien (A) bildet, wobei das Spezialmaterial ein legierter verschleißfester Stahl mit einem Kohlenstoffgehalt von mehr als 0,8 Gew.-% und karbidbildenden Elementen von mehr als 8 Gew.-% ist,
- das Basismaterial (B) und das Spezialmaterial (A), das einen Teil des Walzbarrens (1') enthält, wird mindestens für den Teil der Länge (Lᵥ') des Walzbarrens (1') so heiß bearbeitet, dass nach der Heißbearbeitung folgendes erreicht wird:
- Die Länge (Lᵥ) der Walze (1) ist größer als die Länge (Lᵥ') des Walzbarrens (1') vor der Heißbearbeitung, und/oder
- Der Durchmesser (Hᵥ) der Walze (1) ist kleiner als der Durchmesser (Hᵥ') des Walzbarrens (1') vor der Heißbearbeitung, und/oder
- Der Durchmesser der Welle (3) der Walze (1) (H₃) ist kleiner als der Durchmesser des Basismaterials (B) vor der Heißbearbeitung, und
- Die Schichtdicke von Spezialmaterial (A) aus Multimaterial beträgt mindestens 5 mm,
- **dadurch gekennzeichnet, dass** vor der Heißbearbeitung mindestens das Spezialmaterial (A), das Teile des Walzbarrens (1') enthält, durch eine Kapsel (5) unter Verwendung von mindestens 0,5 mm dickem Metallblech und anderen metallischen Komponenten eingekapselt wird, um die eingekapselten Teile des Walzbarrens (1') während der Heißbearbeitung zu schützen, und wobei
- die Heißbearbeitung über die gesamte Länge des Walzbarrens (1') durchgeführt wird.

2. Verfahren nach Anspruch 1, **dadurch gekennzeichnet, dass** das Spezialmaterial (A) ein auf Eisen basierendes Material ist, umfassend
- Kohlenstoffgehalt von mehr als 0,8 Gew.-%,
- Karbid- und nitridbildende Elemente mit mehr als 12 Gew.-%,
- Volumenanteil von Karbiden und Nitriden 5-30 Vol.-%,
- Härte wärmebehandelt für den endgültigen Betriebszustand mehr als HRC 35.

3. Verfahren nach einem der vorstehenden Ansprüche 1 bis 2, **dadurch gekennzeichnet, dass** die durchschnittliche Karbidgröße im Spezialmaterial (A) kleiner als 50 µm ist.

4. Verfahren nach einem der vorstehenden Ansprüche 1 bis 2, **dadurch gekennzeichnet, dass** die durchschnittliche Karbidgröße im Spezialmaterial (A) 1-10 µm beträgt.

5. Verfahren nach einem der vorstehenden Ansprüche 1 bis 4, **dadurch gekennzeichnet, dass** nach der Verkapselung und vor der Heißbearbeitung des Walzbarrens (1'),
- der leere Raum unter der Kapsel (5) evakuiert oder mit dem Gas gefüllt wird, und
- danach wird der vorgenannte Leerraum gasdicht verschlossen, um Oxidation und/oder Entkohlung zu verhindern.

6. Verfahren nach einem der vorstehenden Ansprüche 1 bis 5, wobei der das Spezialmaterial (A) enthaltende Teil mit dem das Basismaterial (B) enthaltenden Teil des Walzbarrens (1') verbunden wird, **dadurch gekennzeichnet, dass** zwischen diesen Materialien eine Zwischenschicht (6) angeordnet ist, die ein Zwischenschichtmaterial (C) enthält.

7. Verfahren nach einem der vorstehenden Ansprüche 1 bis 6, **dadurch gekennzeichnet, dass** das Spezialmaterial (A), das einen Teil oder die Zwischenschicht (6) enthält, mit dem Basismaterial (B), das einen Teil des Walzbarrens (1') enthält, durch heißisostatisches Pressen, Gießen, Spritzen oder Sprühformen von geschmolzenem Metall, 3D-Druck, Schweißen oder durch ein anderes additives Herstellungsverfahren verbunden wird.

8. Verfahren nach einem der vorstehenden Ansprüche 1 bis 7, **dadurch gekennzeichnet, dass** das Spezialmaterial (A) pulvermetallurgische Materialien sind.

9. Verfahren nach bis einem der vorstehenden Ansprüche 1 bis 8, **dadurch gekennzeichnet, dass** das Spezialmaterial (A) enthaltende Teil des Walzbarrens (1') mit dem Basismaterial (B) enthaltenden Teil während der Herstellung des Spezialmaterials (A) verbunden wird.

10. Verfahren nach einem der Ansprüche 1 bis 9, **dadurch gekennzeichnet, dass** das Basismaterial (B) und das Spezialmaterial (A) unter Verwendung eines additiven Herstellungsverfahrens, wie beispielsweise Spritzen von geschmolzenem Metall, Sprühformung und 3D-Druck, hergestellt werden.

11. Verfahren nach einem der vorstehenden Ansprüche 1 bis 10, **dadurch gekennzeichnet, dass** die Heißbearbeitung durch Warmschmieden, Warmpressen oder Warmwalzen bei einer Temperatur von 800-1300 °C durchgeführt wird.

12. Verfahren nach einem der vorstehenden Ansprüche 1 bis 11, **dadurch gekennzeichnet, dass**
- die Länge (Lᵥ) der fertigen Walze (1) mehr als 3 Meter beträgt,
- Spezialmaterial (A), das einen Teil enthält, eine Beschichtung auf der äußeren Oberfläche der fertigen Walze (1) bildet, sodass diese eine Beschichtung über eine Länge von mindestens 500 mm der Gesamtlänge (Lᵥ) der fertigen Walze (1) bildet, und
- Spezialmaterial (A) eine mindestens 10 mm dicke Schicht auf mindestens 80 % des gesamten Bereichs der Beschichtung bildet.

## Revendications

1. Procédé de fabrication de rouleaux multimatériaux (1) comprenant les étapes suivantes :
- un matériau de base (B) contenant une partie du lingot de rouleau (1') est produit sur la base du procédé sélectionné de sorte que le matériau de base (B) est un matériau ferreux qui contient d'autres éléments d'alliage que le fer, au maximum 15 % en poids,
- un matériau spécial (A) contenant une partie est joint au matériau de base (B) contenant des parties du lingot de rouleau (1'), qui est produit à l'aide d'un procédé approprié de sorte que la densité du matériau spécial (A) est d'au moins 90 % de sa densité théorique et qu'elle forme 5 à 40 % en volume du volume total du matériau de base (B) et des matériaux spéciaux (A), dans lequel le matériau spécial est un acier allié résistant à l'usure ayant une teneur en carbone supérieure à 0,8 % en poids et des éléments formant du carbure à plus de 8 % en poids,
- le matériau de base (B) et le matériau spécial (A) contenant une partie du lingot de rouleau (1') sont travaillés à chaud au moins sur la partie de la longueur (Lᵥ') du lingot de rouleau (1') de sorte que l'on obtient après le travail à chaud les résultats suivants :
- la longueur (Lᵥ) du rouleau (1) est plus longue que la longueur (Lᵥ') du lingot de rouleau (1') avant le travail à chaud, et/ou
- le diamètre (Hᵥ) du rouleau (1) est inférieur au diamètre (Hᵥ') du lingot de rouleau (1') avant le travail à chaud, et/ou
- le diamètre (H₃) de l'arbre (3) du rouleau (1) est inférieur au diamètre du matériau de base (B) avant le travail à chaud, et
- l'épaisseur de couche de matériau spécial multimatériaux (A) est d'au moins 5 mm,
- **caractérisé en ce que,** avant le travail à chaud, au moins le matériau spécial (A) contenant des parties du lingot de rouleau (1') est encapsulé par une capsule (5) utilisant une tôle d'au moins 0,5 mm d'épaisseur et d'autres composants métalliques pour protéger les parties encapsulées du lingot de rouleau (1') pendant le travail à chaud, et dans lequel
- le travail à chaud est exécuté sur toute la longueur du lingot de rouleau (1').

2. Procédé selon la revendication 1, **caractérisé en ce que** le matériau spécial (A) est un matériau à base de fer comprenant
- une teneur en carbone supérieure à 0,8 % en poids,
- des éléments formant du carbure et du nitrure à plus de 12 % en poids,
- une fraction volumique de carbures et de nitrures de 5 à 30 % en volume,
- une dureté traitée thermiquement pour les conditions de fonctionnement finales supérieure à HRC 35.

3. Procédé selon l'une quelconque des revendications précédentes 1 et 2, **caractérisé en ce que** la taille moyenne du carbure dans le matériau spécial (A) est inférieure à 50 µm.

4. Procédé selon l'une quelconque des revendications précédentes 1 et 2, **caractérisé en ce que** la taille moyenne du carbure dans le matériau spécial (A) est de 1 à 10 µm.

5. Procédé selon l'une quelconque des revendications précédentes 1 à 4, **caractérisé en ce qu'**après l'encapsulation et avant le travail à chaud du lingot de rouleau (1'),
- l'espace vide situé sous la capsule d'encapsulation (5) est évacué ou rempli de gaz, et
- par la suite, l'espace vide susmentionné est fermé de manière étanche au gaz afin d'éviter l'oxydation et/ou la décarburation.

6. Procédé selon l'une quelconque des revendications précédentes 1 à 5, dans lequel le matériau spécial (A) contenant une partie est joint au matériau de base (B) contenant une partie du lingot de rouleau (1'), **caractérisé en ce qu'**entre ces matériaux est agencée une couche intermédiaire (6) contenant un matériau de couche intermédiaire (C).

7. Procédé selon l'une quelconque des revendications précédentes 1 à 6, **caractérisé en ce que** le matériau spécial (A) contenant une partie ou la couche intermédiaire (6) sont joints au matériau de base (B) contenant une partie du lingot de rouleau (1') par pressage isostatique à chaud, coulée, pulvérisation de métal fondu ou formage par pulvérisation, impression 3D, soudage ou autre procédé de fabrication additive.

8. Procédé selon l'une quelconque des revendications précédentes 1 à 7, **caractérisé en ce que** le matériau spécial (A) est constitué de matériaux métallurgiques en poudre.

9. Procédé selon l'une quelconque des revendications précédentes 1 à 8, **caractérisé en ce que** le matériau spécial (A) contenant une partie du lingot de rouleau (1') est joint au matériau de base (B) contenant une partie lors de la fabrication du matériau spécial (A).

10. Procédé selon l'une quelconque des revendications 1 à 9, **caractérisé en ce que** le matériau de base (B) et le matériau spécial (A) sont produits à l'aide d'un processus de fabrication additive tel que la pulvérisation de métal fondu, le formage par pulvérisation et l'impression 3D.

11. Procédé selon l'une quelconque des revendications précédentes 1 à 10, **caractérisé en ce que** le travail à chaud est exécuté à l'aide d'un forgeage à chaud, d'un pressage à chaud ou d'un laminage à chaud à une température de 800 à 1 300 °C.

12. Procédé selon l'une quelconque des revendications précédentes 1 à 11, **caractérisé en ce que**
- la longueur (Lᵥ) du rouleau fini (1) est supérieure à 3 mètres,
- le matériau spécial (A) contenant une partie forme un revêtement sur la surface externe du rouleau fini (1) de sorte que celui-ci forme un revêtement sur au moins une longueur de 500 mm de la longueur totale (Lᵥ) du rouleau fini (1), et
- le matériau spécial (A) forme un revêtement d'au moins 10 mm d'épaisseur sur au moins 80 % de la surface totale du revêtement.
